# EUROPÄISCHE PATENTSCHRIFT

(11) **EP 0 577 829 B1**
(45) Veröffentlichungstag und Bekanntmachung des Hinweises auf die Patenterteilung: **08.04.1998**
(21) Anmeldenummer: 93914536.3
(22) Anmeldetag: 28.01.1993
(51) Int. Cl.: G02B 27/24, G02B 27/22, G09F 19/16

(54) **VORRICHTUNG FÜR DIE ERZEUGUNG VON DREIDIMENSIONALEN ABBILDUNGEN**
DEVICE FOR PRODUCING THREE-DIMENSIONAL IMAGES
GENERATEUR D'IMAGES TRIDIMENSIONNELLES

(30) Priorität: 28.01.1992 DE 4202303
(43) Veröffentlichungstag der Anmeldung: 12.01.1994
(73) Patentinhaber: Dimensional Media Associates, Inc., New York, NY 10011 (US)
(72) Erfinder: KATZ, Burkhard, D-5063 Overath (DE); SUMMER-KASEN, Susan, New York, NY 10128 (US)
(74) Vertreter: Zeitler & Dickel
(86) Internationale Anmeldenummer: EP9300195
(87) Internationale Veröffentlichungsnummer: WO9315431

(56) Entgegenhaltungen:
- EP-A- 0 324 326
- FR-A- 2 345 970
- PATENT ABSTRACTS OF JAPAN vol. 5, no. 173 (P-87)14 January 1980 & JP,A,56 101 118 ( MITSUBISHI ELECTRIC ) 13 August 1981
- BEHAVIOR RESEARCH METHODS & INSTRUMENTATION Bd. 15, Nr. 4, August 1983, US Seiten 420 - 423 STARKEY ET AL 'A technique for making realistic three-dimensional images of objects'

## Beschreibung

Die Erfindung bezieht sich auf eine Vorrichtung zur Erzeugung eines dreidimensionalen Bildes eines Objektes.

Aus der FR-A-2 345 970 ist eine Vorrichtung zur Erzeugung von dreidimensionalen Abbildungen bekannt, bei welcher zwei Hohlspiegel mit ihren konkaven Spiegelflächen einander gegenüberliegend fixiert sind. Der obere Spiegel besitzt ein Fenster, wobei der Strahlengang derart verläuft, daß ein auf dem unteren Spiegel liegender Gegenstand durch das Fenster hindurch derart reflektiert wird, daß oberhalb der Anordnung ein reelles Bild des Gegenstandes entsteht. Mit dieser Vorrichtung lassen sich jedoch lediglich relativ kleine auf dem Boden des unteren Spiegels liegende Gegenstände projizieren. Insbesondere ist keinerlei Kombination des projizierten Gegenstandes mit anderen sich außerhalb der Vorrichtung befindlichen Darstellungen und/oder Gegenständen möglich.

Eine auf dem gleichen Reflexionsprinzip beruhende Vorrichtung ist aus der JP-A-56 101 118 bekannt. Dort sind in beiden Hohlspiegeln Fenster vorgesehen, von denen eines mittels eines Flüssigkristalls verschließbar ist, während vor dem anderen auf einen Revolverkopf gehaltene Objekte plazierbar sind. Eine Kombination der reflektierten Bilder mit realen Gegenständen oder Darstellungen ist auch hier nicht möglich.

Die EP-A-0 324 326 beschreibt eine Anordnung von zwei mit ihrer konkaven Seite einander gegenüberliegenden Parabolspiegeln, die jeweils im Bereich der optischen Achse eine Öffnung besitzen. Die Spiegel sind derart ausgebildet und angeordnet, daß ein in das Fenster eines der beiden Spiegel eingebrachter Gegenstand im Fenster des gegenüberliegenden Spiegels als identisches Bild erscheint. Eine Kombination oder ein Zusammenwirken mit außerhalb der Spiegel befindlichen Gegenständen oder Darstellungen ist weder beabsichtigt noch möglich.

Schließlich beschreibt der Aufsatz D. Starkey et al., Behaviour Res. Vol. 15, No. 4 (1983), pp. 420 - 423, eine Vorrichtung zur Erzeugung eines dreidimensionalen Bildes eines Gegenstandes, die auf dem gleichen Reflexionsprinzip beruht. Es werden dort die Strahlengänge im einzelnen abgeleitet und erläutert. Auch hier handelt es sich lediglich um die Darstellung der Abbildung eines Gegenstandes. Eine Kombination eines derart erzeugten Bildes etwa mit Personen, Gegenständen oder sonstigen Darstellungen wird nicht beschrieben und ist nicht beabsichtigt.

Der Erfindung liegt die Aufgabe zugrunde, eine derartige Vorrichtung so auszubilden, daß für den Betrachter die dreidimensionale Abbildung vor der Vorrichtung frei im Raum zu schweben scheint und so mit reellen Gegenständen oder Personen kombiniert werden kann. Weiterhin liegt der Erfindung die Aufgabe zugrunde, frei im Raum schwebende dreidimensionale Abbildungen zu erzeugen, die in einem gewissen Rahmen vergrößert oder verkleinert werden können, und in reelle Gegenstände oder Personen übergeblendet oder von diesen durchdrungen werden können.

Gelöst wird diese Aufgabe gemäß der Erfindung durch die im Kennzeichen des Anspruchs 1 angegebenen Merkmale, wobei hinsichtlich bevorzugter Ausgestaltungen der erfindungsgemäßen Vorrichtung auf die Merkmale der Unteransprüche verwiesen wird.

Das zu projizierende Objekt, das vorzugsweise nahe dem, vom Betrachter aus, hinteren (zweiten) Hohlspiegel angeordnet ist, wird in dem vorderen (ersten) Hohlspiegel reflektiert und auf den von dem Betrachter einsehbaren zweiten Hohlspiegel geworfen. Durch den zweiten Hohlspiegel mit vorzugsweise dem gleichen Krümmungsradius werden die Verzerrungen der ersten Reflexion wieder aufgehoben, das Bild erscheint dem Betracher scharf und bildet sich für den Betrachter in einem erheblichen Abstand vor der Oberfläche des hinteren Hohlspiegels ab.

Die Hohlspiegel können leicht elliptisch oder parabolisch geformt sein. Eine besonders verzerrungsfreie Abbildung ergibt sich bei der Verwendung zweier sphärischer Hohlspiegel mit gleichem Krümmungsradius.

Haben die Hohlspiegel die Form einer Kugelkappe, deren Mittelpunkte auf einer Achse liegen, und ist das zu projizierende Objekt im Bereich dieser Achse nahe der Oberfläche des vom Betrachter aus hinten liegenden Hohlspiegels angeordnet, wobei sich in dem vorderen Hohlspiegel im Bereich der Achse eine Sichtöffnung befindet, so wird die dreidimensionale Abbildung in einem kegelmanteltförmigen Bereich von allen Seiten sichtbar. Mit solch einer Vorrichtung lassen sich zum Beispiel Werbeabbildungen in Schaufenstern oder an Gebäuden oder öffentlichen Plätzen einer großen Zuschauermenge präsentieren.

Je nach der Dimensionierung der Vorrichtung kann der für den Betrachter sichtbare Raum so groß ausgelegt werden, daß sich der Gegenstand darin bewegen kann. Auf diese Weise können auch animierte Gegenstände oder lebende Personen projiziert werden, und die Vorrichtung läßt sich für jede Art von Show- oder Theatervorführungen sowie für die Spezialeffekte von Filmaufnahmen nutzen.

Durch Veränderung der Position der Hohlspiegel zueinander, zum Beispiel durch axiales Verschieben oder durch Verschwenken eines der beiden Hohlspiegel, ergibt sich eine Vergrößerung oder Verkleinerung der dreidimensionalen Abbildung. Werden die Spiegeloberflächen auseinanderbewegt, läßt sich die Abbildung in gewissem Rahmen vergrößern, werden die Spiegeloberflächen aufeinander zugeführt, verkleinert sich die Abbildung. Auch durch eine Verschiebung des Objektes läßt sich ein ähnlicher Effekt erzielen. Bewegt sich das Objekt auf die Oberfläche des vorderen Hohlspiegels zu, erscheint es vergrößert, bewegt es sich von dieser Oberfläche weg, erscheint es verkleinert.

Damit diese Größenänderung die Abbildung nicht störend verzerrt, ist der Krümmungsradius der Spiegel ausreichend groß zu wählen. Andererseits kann diese Vergrößerung und Verkleinerung für die Erzielung von Showeffekten genutzt werden.

Für den Einsatz dieser Vorrichtung in Theatern oder auf Konzerten, bei denen das Publikum sich nur innerhalb eines bestimmten Winkelbereiches vor der Bühne befindet, ist es ausreichend, daß die Hohlspiegel der Vorrichtung nur Teilbereiche einer Kugelkappe bilden. Dadurch reduziert sich erheblich der Bauraum der Vorrichtung, der insbesondere für die Abbildung von Menschen recht groß ist. An die Randbereiche dieser Hohlspiegel sollten sich schwarze Wände anschließen, die mit den Hohlspiegeln im wesentlichen einen geschlossenen Raum bilden, so daß keine störenden Reflexionen über die Hohlspiegel auf den Betrachter geworfen werden. Sind die Hohlspiegel über Hydraulikzylinder oder sonstige Antriebsmittel zur Ausnützung der Vergrößerungs- und Verkleinerungseffekte gegeneinander verschiebbar oder verschwenkbar, so sollten diese Wände sich entweder faltenbalgartig mitbewegen oder bei reiner axialer Verschiebung oder reinem Verschwenken der Hohlspiegel so ausgebildet sein, daß die Spiegel in jeder Position dicht an den Wänden anliegen.

Die Lichtquellen, die ein zu projizierendes, nicht selbstleuchtendes Objekt beleuchten, können entweder,vom Betrachter aus,im Bereich vor der Vorrichtung oder in für den Betrachter nicht sichtbaren Bereichen der Vorrichtung, zum Beispiel direkt um die Sichtöffnung herum oder im Randbereich der Hohlspiegel, angeordnet sein. Das Objekt kann sowohl direkt als auch über Reflexionen in den Hohlspiegeln bestrahlt werden. Durch die Wahl der Lichtquellen, zum Beispiel in Strahlweite, -farbe, -form und -richtung steuerbare Strahler oder Laserlicht, läßt sich die Abbildung verfremden aber auch die Qualität der Abbildungen beeinflussen. Die schärfste Darstellung ergibt sich durch eine Beleuchtung mit kohärentem weißen Laserlicht. Werden die Laserlichtquellen in einem Scanner, der die Richtung des Laserstrahles verändern kann und computer-steuerbar ist, angebracht, so können zusätzlich zu dem Effekt auch Laser-Showeffekte mit Hilfe dieser Vorrichtung erzeugt und projiziert werden.

Neben der Projektion von Abbildungen von reellen Gegenständen und Personen lassen sich natürlich auch die Darstellungen auf Bildschirmen projizieren. Da die Vorrichtung zur Projektion der Abbildungen für ein ebenes Betrachterpublikum erheblich geneigt werden muß, kann es auch sinnvoll sein, die zu projizierenden Objekte auf ebenem Boden anzuordnen und über einen Planspiegel in die Projektionsvorrichtung hineinzureflektieren.

Es ist vorteilhaft, die Projektionsvorrichtung vor dem direkten Einblick durch den Zuschauer zu verdecken. Hierzu ist ein semitransparenter Schirm vom Zuschauer aus vor der Projektionsvorrichtung anzuordnen. Das Objekt muß ausreichend stark ausgeleuchtet werden, damit für den Zuschauer durch den semitransparenten Schirm hindurch die dreidimensionale Abbildung sichtbar ist. Die Außenseite der Vorrichtung sowie die Hohlspiegel sollten möglichst dunkel gehalten werden, damit sie durch den semitransparenten Schirm hindurch nicht sichtbar sind. Die wirkungsvollste Abdeckung der Projektionsvorrichtung ergibt sich, wenn der semitransparente Schirm in seinen Randbereichen undurchsichtig ist und seine Transparenz nach innen kontinuierlich zunimmt, so daß seine größte Transparenz im Bereich vor der Sichtöffnung liegt.

Der semitransparente Schirm kann zwischen der Sichtöffnung und dem Abbildungsbereich, in dem die dreidimensionale Abbildung zu liegen scheint, oder innerhalb des Abbildungsbereiches liegen. Im zweiten Fall scheint die dreidimensionale Abbildung die von dem semitransparenten Schirm gebildete Wand zu durchdringen.

Bei einem verspiegelten semitransparente Schirm entsteht die dreidimensionale Abbildung vor dem gespiegelten Hintergrund, z.B. dem dunklen Zuschauerraum, erzeugt jedoch selbst kein Spiegelbild in diesem Schirm.

Ist der semitransparente Schirm unverspiegelt, so können auf ihn mittels eines Projektors Bilder oder Filme projiziert werden, die mit der dreidimensionalen Abbildung kombinierbar sind. Hierbei ist die Lichtstärke des Projektors und des zu projizierenden Objektes derart aufeinander abzustimmen, daß sowohl das Bild oder der Film als auch die drei-dimensionale Abbildung für den Zuschauer klar sichtbar sind.

In der folgenden Beschreibung werden mehrere Ausführungsbeispiele der Erfindung näher erläutert. Die Zeichnungen zeigen in:
- Fig. 1: perspektivisch das Prinzip der Vorrichtung, das jedoch nicht Bestandteil der Erfindung bildet,
- Fig. 2: die Seitenansicht einer Ausführungsform der erfindungsgemäßen Vorrichtung, die in ein Theater integriert ist,
- Fig. 3: die Seitenansicht einer weiteren Ausführungsform mit gegeneinander verschwenkbaren Hohlspiegeln,
- Fig. 4: die Unteransicht des vorderen (ersten) Hohlspiegels aus Fig. 3 und
- Fig. 5: die Seitenansicht einer Ausführungsform der Vorrichtung mit semitransparentem Schirm.

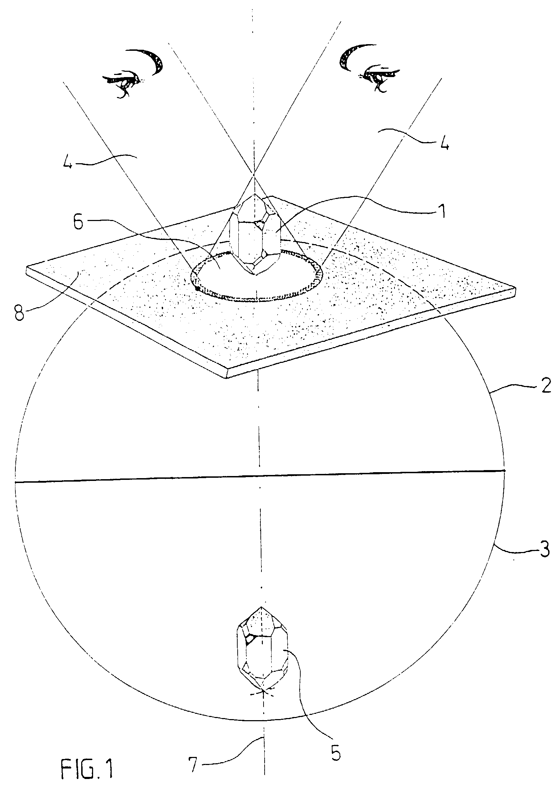

Die in Fig. 1 dargestellte Vorrichtung besteht aus zwei halbkugelförmigen Hohlspiegeln 2,3, wovon der,vom Betrachter aus gesehen, vordere (erste) Hohlspiegel 2 mit einer Sichtöffnung 6 versehen ist. In einem kegelmantelförmigen begrenzten Winkelbereich 4 ist für einen Betrachter ein Ringbereich des hinteren (zweiten) Hohlspiegels 3 sichtbar, in dem sich das in die Vorrichtung eingebrachte Objekt 5 über den ersten Hohlspiegel 2 reflektiert. Dadurch, daß beide Hohlspiegel 2,3 den gleichen Krümmungsradius haben, heben sich die Aberationen der Spiegelungen gegenseitig auf. Durch die doppelte Spiegelung in einem sphärischen Hohlspiegel entsteht für den Betrachter ein dreidimensionales Bild 1 des Objektes 5, welches sich in erheblichem Abstand von dem zweiten Hohlspiegel 3 im Bereich der Sichtöffnung 6 zu befinden scheint. Bei entsprechender Form- und Verspiegelungsqualität der Hohlspiegel 2,3 erscheint das Bild absolut reell. Die Abbildung eines Objektes 5, der sich nahe der Oberfläche des zweiten Hohlspiegels 3 im Bereich seiner Rotationsachse 7 befindet, erscheint dabei so gut wie nicht verzerrt. Eine im Bereich der Achse 7 auf der Oberfläche des Hohlspiegels 3 liegende Münze würde zum Beispiel für den Betrachter in der Sichtöffnung 6 in ihren natürlichen Proportionen erscheinen.

Soll das erzeugte dreidimensionale Bild 1 mit einem reellen Gegenstand kombiniert werden, kann die Sichtöffnung 6 mit einer Glasplatte 8 abgedeckt werden, auf der sich reelle Gegenstände anbringen lassen.

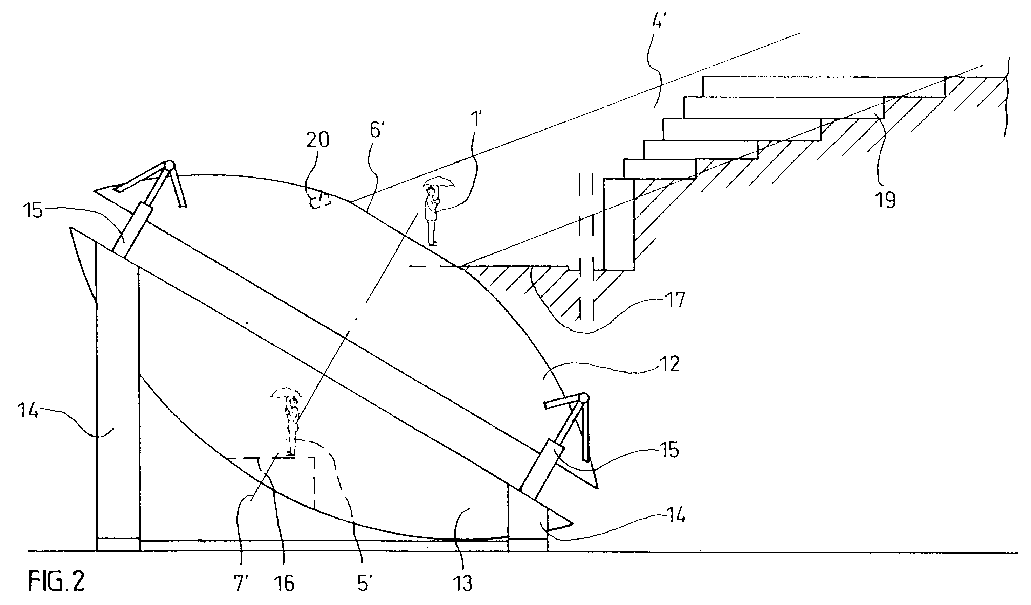

Zur möglichst unverzerrten Abbildung größerer Gegenstände, wie zum Beispiel Schauspieler, dient die in Fig. 2 dargestellte Ausführungsform der Erfindung. Die Hohlspiegel 12,13 haben einen Krümmungsradius im Bereich von 10 bis 20 m. Damit die Vorrichtung baulich in ein Theater oder eine Konzertbühne integriert werden kann, werden von den die Hohlspiegel 12,13 bildenden Kugelkappen die Bereiche des Kugelbauches weggelassen. Die Hohlspiegel 12,13 bilden hier etwa das obere bzw. untere Drittel einer Halbkugel, so daß sich bei einem Kugelradius von 10 m eine maximale Erstreckung der aufeinanderliegenden Hohlspiegel 12,13 von 6 m ergibt.

Fig. 2 zeigt weiter eine Objektbühne 16 zur Aufnahme des zu projizierenden Objektes 5'. Der vom Betrachtungsraum 4' nicht einsehbare Teil der Objektbühne 16 ist schwarz ausgeführt, damit er kein störendes Licht abstrahlt. Der im Sichtbereich des Betrachtungsraumes 4' liegende Bereich der Objekt-Bühne 16 ist durchsichtig ausgeführt, damit die Reflexion nicht gestört wird. Je nach Anwendungszweck der Vorrichtung ist diese Objektbühne 16 über geeignete Antriebsmittel schwenkbar, drehbar, verschiebbar oder heb- und senkbar.

Die Hydraulikzylinder 15, mit denen der erste Hohlspiegel 12 am Tragegestell 14 angelenkt ist, ermöglichen die Veränderung des axialen Abstandes zwischen den Hohlspiegeln 12,13, wodurch sich die Größe der Projektion 1' variieren läßt.

Die Sichtöffnung 6', in deren Bereich die Projektion 1' für den Betrachter zu stehen scheint, ist in eine Bühne 17 integriert. Um die dreidimensionale Abbildung 1' mit reellen Gegenständen frei kombinieren zu können, reicht ein Teil der Bühne 17 in die Sichtöffnung 6' hinein. Dieser Teil ist durchsichtig ausgeführt, damit er den Bereich des zweiten Hohlspiegels 13, in dem die dreidimensionale Abbildung 1' entsteht, nicht verdeckt.

Der Sichtöffnung 6' gegenüber liegt in dem Betrachtungsraum 4' die Zuschauertribüne 19.

Damit die dreidimensionale Abbildung 1' für alle Zuschauer im Betrachtungsraum 4' sichtbar wird, ist die gesamte Vorrichtung gegenüber der Horizontalen zu kippen. Die Neigung der Rotationsachse 7' der Hohlspiegel 12,13 gegenüber der Vertikalen ist umso größer, je flacher die Zuschauertribüne 19 ausgeführt ist. Bei einer universell einzusetzenden Vorrichtung sind deshalb mechanische oder hydraulische Mittel vorgesehen, mit denen diese Neigung variiert werden kann.

Im Bereich nahe der Sichtöffnung 6' ist für den Betrachter hinter dem ersten Hohlspiegel 12 eine Lichtquelle 20 angeordnet. Mit dieser Lichtquelle 20 kann entweder direkt oder über Reflexionen das zu projizierende Objekt 5' beleuchtet werden.

Da im Theater nur ein Teil des zylindermantelförmigen Betrachtungsraumes 4' mit Zuschauern gefüllt ist, und so nur der den Zuschauern gegenüberliegende Teil des zweiten Hohlspiegels 13 einsehbar ist, über den die Reflexionen im, von den Zuschauern aus gesehen, hinteren Teil des ersten Hohlspiegels 12 sichtbar sind, kann die vordere Partie der Projektionsvorrichtung entfallen.

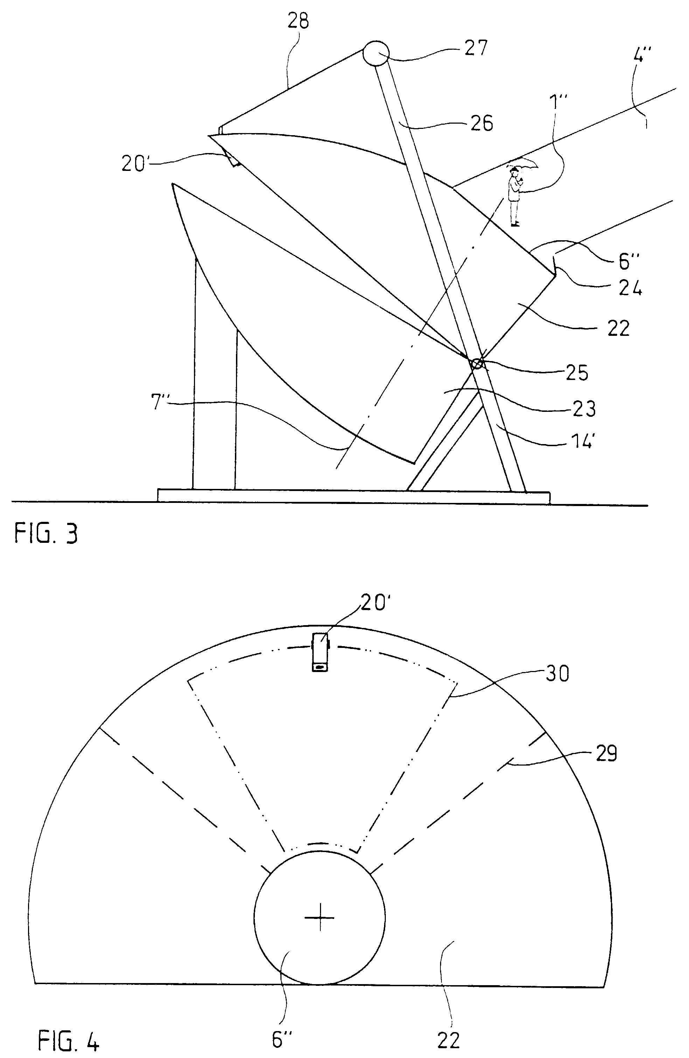

Fig. 3 zeigt eine Ausführungsform der Vorrichtung, bei der nur Teilbereiche von Kugelkappen die Hohlspiegel 22,23 bilden. Fig. 4 zeigt eine Untersicht des ersten Hohlspiegels 22.

Durch das Weglassen des nicht einsehbaren Teils der Hohlspiegel 22,23 verringert sich noch einmal die Baugröße. Die Hohlspiegel 22,23 dieser Ausführungsform sind um eine Achse 25 schwenkbar angelenkt. An dem Tragegestell 14' ist an einem Träger 26 eine Seilwinde 27 angeordnet, deren Seil 28 an dem ersten Hohlspiegel 22 befestigt ist. Mit dieser Seilwinde kann der erste Hohlspiegel 22 relativ zum zweiten Hohlspiegel 23 gekippt werden. Dadurch entstehen die schon beschriebenen Vergrößerungs- und Verkleinerungseffekte der dreidimensionalen Abbildung 1". Eine Verzerrung dieser Abbildung findet kaum statt, da beide Hohlspiegel in jedem Punkt den gleichen Krümmungsradius haben.

Um den direkten Blick aus dem Betrachtungsraum 4" auf das zu projizierende Objekt zu verdecken, ist im vorderen Bereich der Sichtöffnung 6" eine Sichtblende 24 angeordnet.

Die Lichtquelle 20' ist bei dieser Vorrichtung im Randbereich des ersten Hohlspiegels 22 angeordnet.

Der die Hohlspiegel bildende Teilbereich der Kugelkappe kann je nach Anwendungsfall noch weiter reduziert werden. In der in Fig. 4 dargestellten Unteransicht des ersten Hohlspiegels 22 ist gestrichelt der Kugelkappenteil 29 eingezeichnet, der beispielsweise für eine Vorrichtung verwendet werden kann, der die Betrachter im wesentlichen gerade gegenübersitzen. Der mit einer Strich-Doppelpunktlinie in Fig. 4 eingezeichnete Teilbereich 3 eignet sich für eine Vorrichtung, die nur von einem festgelegten Betrachtungspunkt aus, etwa bei Filmaufnahmen der Standort der Kamera, einsehbar sein muß. Die offenen Bereiche zwischen den Hohlspiegeln 12,13,22,23 der Vorrichtungen aus Fig. 2 und 3 sind zum Verhindern von störendem Lichteinfall mit vorzugsweise schwarzem Wandmaterial (in den Zeichnungen nicht dargestellt) zu verschließen. Hierzu eignen sich lichtundurchlässige schwarze Stoffe, faltenbalgähnliche Vorrichtungen, aber auch starre schwarze Wände, wenn die Hohlspiegel 12,13,22,23 nicht zu viele Freiheitsgrade zueinander haben.

Die Projektion beschränkt sich natürlich nicht nur auf starre Objekte, sondern es können auch sich bewegende lebende oder animierte Objekte projiziert werden. In diesem Fall ist die Projektionsvorrichtung auf den zu erwartenden Bewegungsraum der Objekte auszulegen.

Weiterhin lassen sich auch auf Bildschirme projizierte Darstellungen, wie Fernsehbilder, Dias, Filme oder Laserprojektionen, über das Projektionssystem abbilden. Für den Fall, daß bei einer Vorrichtung zur Projektion der Abbildungen vor einem horizontal angeordneten Publikum der Neigungswinkel der Achse 7',7" der Vorrichtung sehr groß ist, läßt sich der Gegenstand, der sich auf einer horizontalen Bühne befindet, auch über einen ebenen Spiegel, der im Bereich der Achse 7',7" nahe dem zweiten Hohlspiegel 13,23 angeordnet ist, in die Vorrichtung hineinreflektieren.

Für die Erzielung einer optimalen Abbildungsqualität ist die exakte sphärische Form der Hohlspiegel eine Voraussetzung. Außerdem sollten die Spiegel oberflächenverspiegelt sein, da sich durch eine zusätzliche transparente Schicht zwischen dem Objekt und der Spiegelfläche Doppelspiegelungen, Interferenzen und Verzerrungen ergeben können.

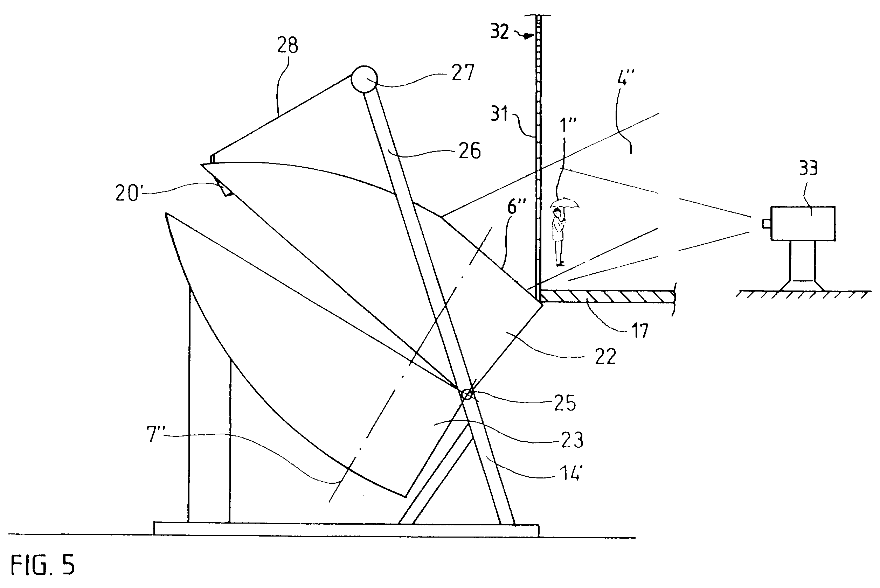

Fig. 5 zeigt die Vorrichtung aus Fig. 3 in Kombination mit einer Bühne 17 für reelle Objekte und Personen und einem semitransparenten Schirm 31, der den direkten Blick aus dem Betrachtungsraum 4" auf die Vorrichtung verdeckt. Der semi-transparente Schirm 31 kann zwischen Decke und Bühne 17 gespannt sein.

Der obere Randbereich 32 des semitransparenten Schirmes 31 ist, wie durch die engere Schraffur angedeutet, undurchsichtig. Die Transparenz des Schirmes 31 nimmt nach innen zu, so daß die größte Transparenz des Schirmes 31 im Bereich vor der Sichtöffnung 6" liegt. Das zu projizierende Objekt muß von der Lichtquelle 20' ausreichend stark ausgeleuchtet werden, so daß die dreidimensionale Abbildung 1" durch den Schirm 31 hindurch sichtbar wird.

Vor dem Schirm 31 ist ein Filmprojektor 33 angeordnet, der ein Filmbild auf den Schirm 31 im Bereich der Sichtöffnung 6" der Vorrichtung projiziert. Wenn die Leuchtstärke des zu projizierenden Objektes in der Vorrichtung stärker ist als die Leuchtstärke des von dem Projektor 33 projizierten Bildes, dann scheint die dreidimensionale Abbildung vor dem projizierten Bild zu liegen.

## Patentansprüche

1. Vorrichtung zur Erzeugung eines dreidimensionalen Bildes (1', 1") eines Objektes (5') mit
einem festgelegten Betrachtungsraum (4', 4") und einer Bühne (17),
einem dem Betrachtungsraum zugewandten ersten konkaven Hohlspiegel (12, 22),
einem dem Betrachtungsraum abgewandten zweiten konkaven Hohlspiegel (13, 23),
wobei die Spiegelflächen der beiden Hohlspiegel einander zugewandt sind,
wobei der erste Hohlspiegel einen durchsichtigen Teilbereich (6', 6") aufweist, so daß zumindest ein Teilbereich des zweiten Hohlspiegels vom Betrachtungsraum aus einsehbar ist, und
wobei der erste Hohlspiegel derart angeordnet ist, daß ein virtuelles Bild des Objektes, das zwischen den beiden Hohlspiegeln angeordnet ist, auf die Bühne zur Kombination mit dortigen reellen Gegenständen oder Personen projiziert wird.

2. Vorrichtung nach Anspruch 1, dadurch gekennzeichnet, daß die Hohlspiegel (12, 22; 12, 23) sphärisch sind und den gleichen Krümmungsradius haben.

3. Vorrichtung nach Anspruch 1 oder 2, dadurch gekennzeichnet, daß die Mittelpunkte der Kugelflächen, auf denen die Hohlspiegel (12, 22; 13, 23) liegen, im wesentlichen auf einer Achse (7', 7") angeordnet sind.

4. Vorrichtung nach einem der vorhergehenden Ansprüche, dadurch gekennzeichnet, daß die Hohlspiegel (12, 13) die Form einer Kugelkappe haben, wobei der erste Hohlspiegel (12) im Bereich seiner Rotationsachse (7') als durchsichtigen Teilbereich eine Sichtöffnung (6') aufweist und das Objekt (5') im Bereich der Rotationsachse (7') des zweiten Hohlspiegels (13) angeordnet ist.

5. Vorrichtung nach Anspruch 4, dadurch gekennzeichnet, daß der Krümmungsradius der Hohlspiegel (12, 13) mindestens fünfmal größer ist als die maximale Erstreckung des zu projizierenden Objektes (5'), daß die Höhe einer den Hohlspiegel (12, 13) bildenden Kugelkappe mindestens 1,2 mal so groß ist wie diese Erstreckung, daß der Kappendurchmesser mindestens sechsmal größer ist als diese Erstreckung und daß der Durchmesser der Sichtöffnung (6') mindestens 1,5 mal so groß ist wie diese Erstreckung.

6. Vorrichtung nach Anspruch 5, dadurch gekennzeichnet, daß der Krümmungsradius und der Kappendurchmesser der Hohlspiegel (12, 13) 10 bis 20 m, die Höhe einer Kappe 2 bis 4 m und der Durchmesser der Sichtöffnung (6') 4 bis 6 m beträgt.

7. Vorrichtung nach einem der vorhergehenden Ansprüche, dadurch gekennzeichnet, daß die Hohlspiegel (22, 23) Teile von Kugelkappen sind.

8. Vorrichtung nach einem der vorhergehenden Ansprüche, dadurch gekennzeichnet, daß die Hohlspiegel (12, 13, 22, 23) an ihren Rändern aufeinanderliegend angeordnet sind.

9. Vorrichtung nach einem der Ansprüche 1 bis 7, dadurch gekennzeichnet, daß die Hohlspiegel (12, 13, 22, 23) im Abstand voneinander angeordnet sind.

10. Vorrichtung nach Anspruch 9, dadurch gekennzeichnet, daß die Ränder der Hohlspiegel (12, 13, 22, 23) dicht an schwarze Wände anliegen, die mit den Hohlspiegeln (12, 13, 22, 23) einen geschlossenen Raum bilden.

11. Vorrichtung nach einem der vorhergehenden Ansprüche, dadurch gekennzeichnet, daß die Hohlspiegel (12, 13, 22, 23) an einer Tragevorrichtung (14, 14') zueinander und/oder zu der Horizontalen einstellbar gehalten sind.

12. Vorrichtung nach einem der vorhergehenden Ansprüche, dadurch gekennzeichnet, daß mindestens ein Hohlspiegel (12, 13, 22, 23) um eine Achse (25) schwenkbar angelenkt ist.

13. Vorrichtung nach Anspruch 11 oder 12, gekennzeichnet durch das Verschwenken oder Verstellen bewirkende Antriebsmittel (15, 27, 28).

14. Vorrichtung nach einem der vorhergehenden Ansprüche, gekennzeichnet durch mindestens eine den direkten Blick auf das zu projizierende Objekt vom Betrachtungsraum (4', 4") aus verdeckende Sichtblende (24).

15. Vorrichtung nach Anspruch 14, dadurch gekennzeichnet, daß die Sichtblende (24) automatisch ein- und ausfahrbar ist.

16. Vorrichtung nach einem der vorhergehenden Ansprüche, dadurch gekennzeichnet, daß für die Aufnahme des zu projizierenden Objektes (5', 5") im Bereich der Achse (7', 7") eine Objektbühne (16) angeordnet ist.

17. Vorrichtung nah Anspruch 16, dadurch gekennzeichnet, daß die Objektbühne (16) schwenkbar, drehbar, verschiebbar oder heb- und senkbar ist.

18. Vorrichtung nach einem der Ansprüche 4 bis 17, dadurch gekennzeichnet, daß die das Objekt (5') beleuchtende Lichtquelle vor der Sichtöffnung (6', 6") angeordnet ist.

19. Vorrichtung nach einem der Ansprüche 4 bis 17, dadurch gekennzeichnet, daß die das Objekt (5') beleuchtende Lichtquelle (20) im Randbereich der Sichtöffnung (6', 6") im ersten Hohlspiegel (12, 22) an dessen verspiegelter Innenseite angeordnet ist.

20. Vorrichtung nach einem der Ansprüche 1 bis 17, dadurch gekennzeichnet, daß die das Objekt (5') beleuchtende Lichtquelle (20') im Randbereich der Hohlspiegel (12, 13, 22, 23), insbesondere des vorderen Hohlspiegels (12, 22), angeordnet ist.

21. Vorrichtung nach einem der Ansprüche 1 bis 17, dadurch gekennzeichnet, daß die das Objekt (5') beleuchtende Lichtquelle von dem Objekt (5') aus hinter teildurchlässigen Bereichen der Hohlspiegel (12, 13, 22, 23) angeordnet ist.

22. Vorrichtung nach einem der Ansprüche 18 bis 21, dadurch gekennzeichnet, daß die Lichtquelle ein Strahler mit von einem Computer steuerbarer Strahlweite, -farbe, -form und -richtung ist.

23. Vorrichtung nach einem der Ansprüche 18 bis 21, dadurch gekennzeichnet, daß die Lichtquelle ein Laser ist.

24. Vorrichtung nach einem der Ansprüche 18 bis 21, dadurch gekennzeichnet, daß die Lichtquelle ein Kollimator mit davor geschalteter Streuungs- oder Prismenoptik ist, der in einem Scanner befestigt und über einen Lichtwellenleiter mit einem Laser verbunden ist.

25. Vorrichtung nach einem der vorhergehenden Ansprüche, dadurch gekennzeichnet, daß am Objektort ein Bildschirm steht.

26. Vorrichtung nach einem der vorhergehenden Ansprüche, dadurch gekennzeichnet, daß das Objekt ein ebener Spiegel ist und daß der abzubildende Gegenstand so hinter dem zweiten Hohlspiegel (23) angeordnet ist, daß er von dem Betrachtungsraum aus über die Hohlspiegel (22, 23) in dem ebenen Spiegel sichtbar ist.

27. Vorrichtung nach einem der vorhergehenden Ansprüche, dadurch gekennzeichnet, daß die Hohlspiegel (12, 13, 22, 23) oberflächenverspiegelt sind.

28. Vorrichtung nach einem der vorhergehenden Ansprüche, dadurch gekennzeichnet, daß zumindest ein Teilbereich der Sichtöffnung (6', 6") mit einem teildurchlässigen Hohlspiegel abgedeckt ist, dessen reflektierende Oberfläche mit dem ersten Hohlspiegel (12, 22) auf einer Kugelfläche liegt.

29. Vorrichtung nach einem der vorhergehenden Ansprüche, dadurch gekennzeichnet, daß zwischen dem ersten Hohlspiegel (12, 22) und der Bühne (17) ein semitransparenter Schirm (31) angeordnet ist.

30. Vorrichtung nach Anspruch 29, dadurch gekennzeichnet, daß der semitransparente Schirm (31) an seinen Randbereichen (32) undurchsichtig ist und seine Transparenz nach innen kontinuierlich zunimmt, so daß seine größte Transparenz im Bereich vor der Sichtöffnung (6") liegt.

31. Vorrichtung nach Anspruch 29 oder 30, dadurch gekennzeichnet, daß sie einen Projektor (33) zur Projektion von Bildern oder Filmen auf den semitransparenten Schirm (31) umfaßt.

32. Vorrichtung nach Anspruch 29 oder 30, dadurch gekennzeichnet, daß der semitransparente Schirm ein teildurchlässiger Spiegel ist.

## Claims

1. An apparatus for generating a three-dimensional image (1', 1") of an object (5') having
a fixed observation area (4', 4") and a stage (17),
a first concave mirror (12, 22) facing the observation area,
a second concave mirror (13, 23) facing away from the observation area,
the reflecting surfaces of the two concave mirrors facing each other,
the first concave mirror having a transparent partial area (6', 6") so that at least a partial area of the second concave mirror can be seen from the observation area, and
the first concave mirror being disposed in such a way that a virtual image of the object disposed between the two concave mirrors is projected onto the stage to be combined with real objects or persons located there.

2. The apparatus of claim 1, characterized in that the concave mirrors (12, 22; 12, 23) are spherical and have the same radius of curvature.

3. The apparatus of claim 1 or 2, characterized in that the centers of the spherical surfaces on which the concave mirrors (12, 22; 13, 23) lie are disposed substantially on one axis (7', 7").

4. The apparatus of any of the above claims, characterized in that the concave mirrors (12, 13) have the form of a spherical cap, the first concave mirror (12) having a viewing aperture (6') as a transparent partial area in the area of its axis of rotation (7'), and the object (5') being disposed in the area of the axis of rotation (7') of the second concave mirror (13).

5. The apparatus of claim 4, characterized in that the radius of curvature of the concave mirrors (12, 13) is at least five times greater than the maximum extension of the object (5') to be projected, the height of a spherical cap forming the concave mirror (12, 13) is at least 1.2 times as great as said extension, the cap diameter is at least six times greater than said extension, and the diameter of the viewing aperture (6') is at least 1.5 times as great as said extension.

6. The apparatus of claim 5, characterized in that the radius of curvature and the cap diameter of the concave mirrors (12, 13) are 10 to 20 m, the height of a cap 2 to 4 m and the diameter of the viewing aperture (6') 4 to 6 m.

7. The apparatus of any of the above claims, characterized in that the concave mirrors (22, 23) are parts of spherical caps.

8. The apparatus of any of the above claims, characterized in that the concave mirrors (12, 13, 22, 23) are disposed with their edges lying one on top of the other.

9. The apparatus of any of claims 1 to 7, characterized in that the concave mirrors (12, 13, 22, 23) are disposed at a distance apart.

10. The apparatus of claim 9, characterized in that the edges of the concave mirrors (12, 13, 22, 23) lie close against black walls forming a closed space with the concave mirrors (12, 13, 22, 23).

11. The apparatus of any of the above claims, characterized in that the concave mirrors (12, 13, 22, 23) are held on a carrying device (14, 14') so as to be adjustable relative to each other and/or to the horizontal.

12. The apparatus of any of the above claims, characterized in that at least one concave mirror (12, 13, 22, 23) swivels around an axis (25).

13. The apparatus of claim 11 or 12, characterized by drive means (15, 27, 28) producing the swivel or adjustment.

14. The apparatus of any of the above claims, characterized by at least one blind (24) preventing the object to be projected from being viewed directly from the observation area (4', 4").

15. The apparatus of claim 14, characterized in that the blind (24) is adapted to be automatically run in and out.

16. The apparatus of any of the above claims, characterized in that an object stage (16) is disposed in the area of the axis (7', 7") for receiving the object (5', 5") to be projected.

17. The apparatus of claim 16, characterized in that the object stage (16) is adapted to be swiveled, rotated, displaced or raised and lowered.

18. The apparatus of any of the above claims, characterized in that the light source illuminating the object (5') is disposed in front of the viewing aperture (6', 6").

19. The apparatus of any of claims 1 to 17, characterized in that the light source (20) illuminating the object (5') is disposed in the edge area of the viewing aperture (6', 6") in the first concave mirror (12, 22) on the reflecting inner surface thereof.

20. The apparatus of any of claims 1 to 17, characterized in that the light source (20') illuminating the object (5') is disposed in the edge area of the concave mirrors (12, 13, 22, 23), in particular the front concave mirror (12, 22).

21. The apparatus of any of claims 1 to 17, characterized in that the light source illuminating the object (5') is disposed behind semitransparent areas of the concave mirrors (12, 13, 22, 23), regarded from the object (5).

22. The apparatus of any of claims 18 to 21, characterized in that the light source is a projector with a beam width, color, form and direction controllable by a computer.

23. The apparatus of any of claims 18 to 21, characterized in that the light source is a laser.

24. The apparatus of any of claims 18 to 21, characterized in that the light source is a collimator preceded by a dispersing or prism optic, said collimator being fastened in a scanner and connected with the laser via an optical waveguide.

25. The apparatus of any of the above claims, characterized in that there is a screen at the place of the object.

26. The apparatus of any of the above claims, characterized in that the object is a plane mirror, and the object to be imaged is disposed behind the second concave mirror (23) in such a way as to be visible from the observation area in the plane mirror via the concave mirrors (22, 23).

27. The apparatus of any of the above claims, characterized in that the concave mirrors (12, 13, 22, 23) are surface-coated.

28. The apparatus of any of the above claims, characterized in that at least a partial area of the viewing aperture (6', 6") is covered with a semitransparent concave mirror whose reflecting surface lies on a spherical surface with the first concave mirror (12, 22).

29. The apparatus of any of the above claims, characterized in that a semitransparent screen (31) is disposed between the first concave mirror (12, 22) and the stage (17).

30. The apparatus of claim 29, characterized in that the semitransparent screen (31) is opaque at its edge areas (32) and its transparency increases continuously toward the inside so that its greatest transparency is in the area in front of the viewing aperture (6").

31. The apparatus of claim 29 or 30, characterized in that it includes a projector (33) for projecting images or films onto the semitransparent screen (31).

32. The apparatus of claim 29 or 30, characterized in that the semitransparent screen is a semitransparent mirror.

## Revendications

1. Appareil pour produire une image tridimensionnelle (1', 1") d'un sujet (5'), comprenant :
un espace d'observation fixe (4', 4") et une scène (17),
un premier miroir concave (12, 22) tourné vers l'espace d'observation,
un second miroir concave (13, 23) détourné de l'espace d'observation,
les surfaces spéculaires des deux miroirs concaves étant tournées l'une vers l'autre,
dans lequel le premier miroir concave présente une zone partielle transparente (6', 6"), de sorte qu'au moins une zone partielle du second miroir concave peut être vue depuis l'espace d'observation, et
le premier miroir concave est agencé de telle manière que l'on projette sur la scène, pour une combinaison avec les objets ou les personnes réels qui s'y trouvent, une image virtuelle du sujet qui est agencé entre les deux miroirs concaves.

2. Appareil selon la revendication 1, caractérisé en ce que les miroirs concaves (12, 22 ; 13, 23) sont sphériques et présentent le même rayon de courbure.

3. Appareil selon l'une ou l'autre des revendications 1 et 2, caractérisé en ce que les centres des surfaces sphériques sur lesquelles sont situés les miroirs concaves (12, 22 ; 13, 23) sont agencés sensiblement sur un axe (7', 7").

4. Appareil selon l'une des revendications précédentes, caractérisé en ce que les miroirs concaves (12, 13) ont la forme d'une coupole sphérique, le premier miroir concave (12) comportant dans la région de son axe de révolution (7') une ouverture d'observation (6') comme zone partielle transparente, et en ce que le sujet (5') est agencé dans la région de l'axe de révolution (7') du second miroir concave (13).

5. Appareil selon la revendication 4, caractérisé en ce que le rayon de courbure des miroirs concaves (12, 13) est au moins cinq fois plus important que l'étendue maximale de l'objet à projeter (5'), en ce que la hauteur de l'une des calottes sphériques formant l'un des miroirs concaves (12, 13) est au moins 1,2 fois plus élevée que cette étendue, en ce que le diamètre de la calotte est au moins 6 fois plus élevé que cette étendue, et en ce que le diamètre de l'ouverture d'observation (6') est au moins 1,5 fois plus élevé que cette étendue.

6. Appareil selon la revendication 5, caractérisé en ce que le rayon de courbure et le diamètre de calotte des miroirs concaves (12, 13) est de 10 à 20 mètres, la hauteur d'une calotte est de 2 à 4 mètres, et le diamètre de l'ouverture d'observation (6') est de 4 à 6 mètres.

7. Appareil selon l'une des revendications précédentes, caractérisé en ce que les miroirs concaves (22, 23) sont des parties de calottes sphériques.

8. Appareil selon l'une des revendications précédentes, caractérisé en ce que les miroirs concaves (12, 13, 22, 23) sont agencés de façon à se toucher mutuellement au niveau de leurs bordures.

9. Appareil selon l'une des revendications 1 à 7, caractérisé en ce que les miroirs concaves (12, 13, 22, 23) sont agencés à distance l'un de l'autre.

10. Appareil selon la revendication 9, caractérisé en ce que les bordures des miroirs concaves (12, 13, 22, 23) sont appliquées de façon intime contre des parois noires, qui forment un espace fermé avec les miroirs concaves (12, 13, 22, 23).

11. Appareil selon l'une des revendications précédentes, caractérisé en ce que les miroirs concaves (12, 13, 22, 23) sont tenus sur des moyens de support (14, 14') de façon à pouvoir être réglés l'un par rapport à l'autre et/ou par rapport à l'horizontale.

12. Appareil selon l'une des revendications précédentes, caractérisé en ce que l'un au moins des miroirs concaves (12, 13, 22, 23) est articulé en basculement autour d'un axe (25).

13. Appareil selon l'une ou l'autre des revendications 11 et 12, caractérisé par des moyens d'entraînement (15, 27, 28) qui assurent le basculement ou le réglage.

14. Appareil selon l'une des revendications précédentes, caractérisé par au moins un obturateur (24) qui masque l'observation directe depuis la chambre d'observation (4', 4") vers l'objet à projeter.

15. Appareil selon la revendication 14, caractérisé en ce que l'obturateur (24) est susceptible d'être rétracté et déployé automatiquement.

16. Appareil selon l'une des revendications précédentes, caractérisé en ce qu'une scène à objet (16) est agencée dans la région de l'axe (7', 7") pour recevoir l'objet à projeter (5', 5").

17. Appareil selon la revendication 16, caractérisé en ce que la scène à objet (16) est susceptible de basculer, de tourner, de se déplacer en translation, ou de se déplacer en montant/descendant.

18. Appareil selon l'une des revendications 4 à 17, caractérisé en ce que la source lumineuse qui éclaire l'objet (5') est agencée devant l'ouverture d'observation (6', 6").

19. Appareil selon l'une des revendications 4 à 17, caractérisé en ce que la source lumineuse (20) qui éclaire l'objet (5') est agencée dans la zone de bordure de l'ouverture d'observation (6', 6") dans le premier miroir concave (12, 22) au niveau de sa face intérieure spéculaire.

20. Appareil selon l'une des revendications 1 à 17, caractérisé en ce que la source lumineuse (20') qui éclaire l'objet (5') est agencée dans la zone de bordure du miroir concave (12, 13, 22, 23) en particulier du miroir concave avant (12, 22).

21. Appareil selon l'une quelconque des revendications 1 à 17, caractérisé en ce que la source lumineuse qui éclaire l'objet (5') est agencée, vue depuis l'objet (5'), derrière des zones partiellement transparentes des miroirs concaves (12, 13, 22, 23).

22. Appareil selon l'une des revendications 18 à 21, caractérisé en ce que la source lumineuse est un projecteur susceptible d'être commandé par un ordinateur pour ce qui concerne la largeur, la couleur, la forme et la direction de projection.

23. Appareil selon l'une des revendications 18 à 21, caractérisé en ce que la source lumineuse est un laser.

24. Appareil selon l'une des revendications 18 à 21, caractérisé en ce que la source lumineuse est un collimateur devant lequel est disposé un système optique à diffraction ou à prisme, qui est fixé dans un scanner et est relié à un laser au moyen d'un guide d'ondes.

25. Appareil selon l'une des revendications précédentes, caractérisé en ce qu'un écran est situé au lieu de l'objet.

26. Appareil selon l'une des revendications précédentes, caractérisé en ce que l'objet est un miroir plan, et en ce que le sujet dont on doit réaliser l'image est agencé derrière le second miroir concave (23) de telle manière qu'il est visible depuis la chambre d'observation dans le miroir plan au-dessus des miroirs concaves (22, 23).

27. Appareil selon l'une des revendications précédentes, caractérisé en ce que les miroirs concaves (12, 13, 22, 23) sont rendus spéculaires en surface.

28. Appareil selon l'une des revendications précédentes, caractérisé en ce qu'une zone partielle au moins de l'ouverture d'observation (6', 6") est recouverte d'un miroir concave partiellement transparent, dont la surface réfléchissante est située avec le premier miroir concave (12, 22) sur une surface sphérique.

29. Appareil selon l'une des revendications précédentes, caractérisé en ce qu'un écran semi-transparent (31) est agencé entre le premier miroir concave (12, 22) et la scène (17).

30. Appareil selon la revendication 29, caractérisé en ce que l'écran semi-transparent (31) est opaque au niveau de ses zones de bordure (32), et en ce que sa transparence augmente vers l'intérieur, de sorte que sa plus forte transparence soit située devant l'ouverture d'observation (6").

31. Appareil selon l'une ou l'autre des revendications 29 ou 30, caractérisé en ce qu'il comprend un projecteur (33) pour la projection d'images ou de films sur l'écran semi-transparent (31).

32. Appareil selon l'une ou l'autre des revendications 29 ou 30, caractérisé en ce que l'écran semi-transparent est un miroir partiellement transparent.
